# EUROPEAN PATENT APPLICATION

(11) **EP 4 783 440 A1**
(43) Date of publication of application: **29.07.2026**
(21) Application number: 25153384.0
(22) Date of filing: 22.01.2025
(51) Int. Cl.: H02M 1/12, H02M 3/00

(54) **MULTI-PHASE CONVERTER**

(71) Applicant: Delta Electronics (Thailand) Public Co., Ltd., Samutprakarn 10280 (TH)
(72) Inventor: SOLANKI, Jitendra, 59494 Soest (DE)
(74) Representative: Hoefer & Partner Patentanwälte mbB

(57) **Abstract**

The invention concerns a multi-phase converter (1), comprising: a transformer device (2) with a primary side (3) with primary winding (4) and a secondary side (5) with secondary winding (6); a primary side circuit (7) connected to the primary winding (4); and a secondary side circuit (8) connected to the secondary winding (6); wherein the secondary side circuit (8) comprises a plurality of rectification legs (9) with rectification elements (10) and an output capacitor leg (11) with a plurality of output capacitors (12), the secondary winding (6) is connected in star configuration, and a star-point (13) of the secondary winding (6) is connected to a middle-point (14) of the plurality of output capacitors (12).

## Description

### Field of the Invention

The invention concerns a multi-phase converter.

### Background of the Invention

Commonly, three-phase LLC unidirectional converters are used especially in the automotive field. Three-phase converters produce common mode voltage. However, in known topologies, a transformer thereof comprises parasitic capacitances. For example, there exists parasitic capacitance, also referred to as stray capacitance, between transformer windings, i.e. between primary side windings and secondary side windings, as well as the respective windings and a housing, i.e. between the primary windings and the housing, and between the secondary windings and the housing. Especially in topologies in which a secondary side of the transformer is connected via a star configuration, these stray capacitances lead to production of resonance with inductances present in resonant circuit.. At the star-point of the secondary side of the transformer, the voltage oscillates and commonly demonstrates an oscillating frequency of roughly three times or multiple of three-times of the operating frequency.

Due to this common-mode voltage, especially with an oscillating frequency three times the frequency of operation, a resonance between resonance-inductance and the transformer parasitic inductance takes place. This resonance increases losses in the transformer and leads to higher temperatures, as well as lower efficiency of the converter. These problems are especially severe in automotive applications, where magnetic components of these topologies are commonly potted for cooling, thus increasing the parasitic capacitances, especially between the windings and the housing.

### Summary

It is an object of the present invention to overcome these deficiencies. In particular, it is an object of the present invention to provide a multi-phase converter in which resonances due to common-mode voltages are suppressed, and which further comprises reduced or no resonance between resonance-inductance and transformer parasitic inductance, and which has lower losses, lower temperature, and higher efficiency.

The solution of these objects is achieved by the subject matter of the independent claim. The dependent claims contain advantageous embodiments of the present invention.

In particular, the solution of these objects is achieved by the multi-phase converter according to claim 1. The multi-phase converter comprises a transformer device with a primary side with primary winding and a secondary side with secondary winding. Furthermore, the converter comprises a primary side circuit connected to the primary winding, and a secondary side circuit connected to the secondary winding. Therein, the secondary side circuit comprises a plurality of rectification legs with rectification elements and an output capacitor leg with a plurality of output capacitors. The secondary winding is connected in star configuration. Furthermore, a star-point of the secondary winding is connected to a middle-point of the plurality of output capacitors.

By providing the star-point of the secondary winding as being connected to the middle-point of the plurality of output capacitors, a pathway for common-mode currents is provided, which therefore stabilizes a star-point voltage, i.e. a voltage at the star-point of the secondary winding. Thereby, since the common-mode currents are diverted, an oscillation of the star-point voltage due to common-mode voltages is suppressed, and therefore a resonance with the parasitic inductances caused by the parasitic capacitances is also suppressed. Therefore, the multi-phase converter has lower losses, reduced temperature, as well as higher efficiency.

In the sense herein, "primary" and "secondary" refer to a case in which for example power is transferred from the converter to a load, for example a battery. In some cases herein, a bidirectional converter is discussed. In such cases, the terms "primary" and "secondary" are interchangeable. However, even in these cases for easier understanding, the terms "primary" and "secondary" will be nonetheless used when referring for example to a reverse power flow direction while referring to the same sides as with forward power flow direction (i.e. the definitions will not be interchanged depending on power flow direction, for easier understanding). Reverse power flow direction will thus be defined as "from secondary side to primary side".

Preferably, the multi-phase converter comprises three or more, especially six or more, and most preferably three phases or six phases. Preferably, the multi-phase converter is a DC-DC converter. In some embodiments, the present multi-phase converter is implemented as a DC-DC stage of an AC-DC converter.

Preferably, and as will be elucidated below, rectification elements of the secondary side circuit are diodes and/or switches.

Preferably, in the three-phase converter example, the primary side circuit comprises three switch legs, each comprising two switches in series with one another, wherein the switch legs are connected in parallel to one another and in parallel to an input voltage.

Preferably, the transformer device comprises one transformer, connected to all phases of the primary and/or secondary side. In preferable alternative embodiments, the transformer device comprises a plurality of transformers, especially corresponding to the number of phases, for example, three or six transformers. Therein, each transformer is connected preferably to one phase of the primary and/or secondary side circuit.

Preferably, the output capacitor leg of the secondary side circuit is directly connected, in parallel, between the rectification legs and an output of the secondary side circuit. Preferably, the output capacitor leg is only connected, in parallel, to the rectification legs and the output of the secondary side circuit, and to the star-point of the secondary winding. In other words, preferably, the output capacitor leg is only connected to the rectification legs and to the star-point of the secondary winding, wherein the secondary side circuit is further connected to the output of the multi-phase converter. In yet other words, preferably, the star-point of the secondary winding is directly connected to the middle of the plurality of output capacitors, and, via the secondary winding, to the rectification legs of the secondary side circuit, without being connected to any other further elements (apart from secondary side resonance elements, for example).

Preferably, the star-point of the secondary winding is connected to the middle-point of the output capacitors directly or using an impedance and/or a switch.

In particular, the star-point of the secondary winding or the middle-point of the plurality of output capacitors of the secondary side circuit are not further directly connected to elements of the primary side circuit. In other words, the star-point of the secondary winding and the middle-point of the plurality of output capacitors are only connected to the primary side circuit indirectly via the transformer device, which insulates the primary side circuit from the secondary side circuit. Furthermore, preferably, the primary side circuit and the secondary side circuit are only connected to one another via the transformer device, without any direct electrical connection there between, thereby maintaining galvanic isolation between primary and secondary side of the circuit.

In preferable embodiments, the output capacitor leg comprises an even number, especially exactly two, output capacitors connected in series with one another. These capacitors can be realized by connecting several capacitors in series and parallel. Therein, the middle-point is substantially in the middle, especially the electrical middle, of all output capacitors. This means two equal capacitor sets are connected in series and middle connection point is connected to the star point. Capacitor values can be subjected to manufacturing tolerances. Middle point is defined such as the total electrical impedance from mid-point to positive rail is equal to impedance from mid-point to negative rail. Whereas impedance is subjected to manufacturing tolerances. In this regard, the electrical middle preferably refers to electrical lengths. Preferably, the term "substantially in the middle" refers to manufacturing errors, which can cause a deviation from the exact middle by ± 5%. Preferably, the term "middle" is with reference to a total length, especially electrical length, of the output capacitor leg. Alternatively, the "middle" may refer preferably to half of the length, especially the electrical length, between one-half of the output capacitors and the other half of the output capacitors. For example, in the case of two output capacitors, the "middle" refers to the physical or electrical middle of a wire length between the two output capacitors.

Preferably, the primary winding is connected in star configuration.

Preferably, a star-point of the primary winding is connected to a middle-point of input capacitors of an input capacitor leg of the primary side circuit. Preferably, in accordance with the foregoing explanations regarding output capacitors and an output capacitor leg of the secondary side circuit, preferably the same applies to the input capacitor leg of the primary side circuit as well as the middle-point of input capacitors thereof. For example, the input capacitor leg of the primary side circuit is connected in parallel to switch legs of the primary side circuit. Furthermore, for example, the input capacitor leg of the primary side circuit comprises a plurality of output capacitors, especially an even number of output capacitors, especially two or four output capacitors. Preferably, the "middle-point" thereof also refers to the physical or electrical middle of the input capacitor leg, especially the wire distance between halves of multiple input capacitors.

Preferably, the star-point of the primary winding is connected to the middle-point directly or using an impedance and/or via a switch. Therein, preferably, as with the foregoing explanation regarding the middle-point of output capacitors, the star-point of the primary winding is connected only to the input capacitor leg and the switch legs via the primary winding. In the exemplary case of including a switch between the primary side star-point and the middle-point of the output capacitors, in exemplary implementation in a bidirectional converter (see below), the star-point to middle-point connection can be selectively activated, when power transfer is reversed, i.e. from "secondary" to "primary" side. Thereby, during "normal" operation, i.e. "primary" to "secondary" power transfer, efficiency can be increased by deactivation of the switch.

The inclusion of impedance between star-point and middle-point of the capacitors helps to reduce the current flowing between these two points. This in turn reduces the losses in the system. Further a switch can be used to enable and disable the connection between star-point and middle-point of the capacitors, especially depending on the operating frequency, as resonance can be more pronounced at some operating frequencies and less at other operating frequencies. Thereby, the losses occurring in the system due to the flow of current between star-point and middle-point of the output capacitors can be reduced or eliminated.

In further preferable embodiments, the primary side circuit comprises delta connected resonant capacitors. Preferably, the primary winding thereof is connected in delta configuration. Alternatively, the delta connected resonant capacitors can be preferably combined with the primary winding in star connection, and vice versa, i.e. star connected resonant capacitors can be connected to delta connected primary winding.

Preferably, in some embodiments, the primary side circuit comprises star connected resonant capacitors. As also elucidated above, the star connected resonant capacitors of the primary circuit are preferably combinable with the primary winding being connected in star configuration or with the primary winding being connected in delta configuration.

Preferably, the converter is unidirectional, wherein at least a part of the rectification elements of the secondary side circuit are diodes. Preferably, the rectification elements of the secondary side circuit are all diodes or are diodes and switches. For example, the rectification legs of the secondary side circuit comprise respectively one switch and one diode connected in series with one another. Alternatively, the rectification legs of the secondary side circuit comprise two diodes connected in series with one another.

Alternatively, the converter is preferably bidirectional, wherein the rectification elements of the secondary side circuit are switches. Therein, preferably, all rectification elements of the secondary side circuit are switches. For example, each rectification leg of the secondary side circuit comprises two switches in series with one another.

Preferably, the converter is an LLC converter or a series resonant converter. Preferably, both LLC and SR converter examples are combinable with unidirectional or bidirectional examples as above. Preferably, the series resonant converter in the unidirectional case comprises switches and diodes as rectification elements, as elucidated above.

In preferable embodiments, the primary side circuit comprises a plurality of the primary switch legs with primary switches, wherein each of the primary switch legs comprises a plurality of stacked primary half-bridges connected in series with one another. Therein, the primary switch legs are connected in parallel to one another; and one phase of the primary side of the transformer device is connected between two primary half-bridges in series with one another. In other words, preferably, the primary side of the transformer device thereof is connected between two different primary half-bridges in series with one another.

Preferably, each of the secondary rectifier legs comprises a plurality of stacked secondary half-bridges connected in series with one another.

The foregoing described preferable embodiments and configurations may be combined.

Further details, advantages, and features of the preferred embodiments of the present invention are described in detail with reference to the figures. Therein:

### Brief Description of the Drawings

Fig. 1 shows a schematic diagram of a multi-phase converter according to a first embodiment of the present invention;
Fig. 2 shows a schematic diagram of a multi-phase converter according to a second embodiment of the present invention;
Fig. 3 shows a schematic diagram of a multi-phase converter according to a third embodiment of the present invention;
Fig. 4 shows a schematic diagram of a multi-phase converter according to a fourth embodiment of the present invention;
Fig. 5 shows a schematic diagram of a multi-phase converter according to a fifth embodiment of the present invention;
Fig. 6 shows a schematic diagram of a multi-phase converter according to a sixth embodiment of the present invention;
Fig. 7 shows a schematic diagram of a multi-phase converter according to a seventh embodiment of the present invention;
Fig. 8 shows a schematic diagram of a multi-phase converter according to an eighth embodiment of the present invention;
Fig. 9 shows a schematic diagram of a multi-phase converter according to a ninth embodiment of the present invention;
Fig. 10 shows a schematic diagram of a multi-phase converter according to a tenth embodiment of the present invention;
Fig. 11 shows a schematic diagram of a multi-phase converter according to an eleventh embodiment of the present invention;
Fig. 12 shows a schematic diagram of a multi-phase converter according to a twelfth embodiment of the present invention; and
Fig. 13 shows a schematic diagram of a multi-phase converter according to a thirteenth embodiment of the present invention.

### Description of the Embodiments

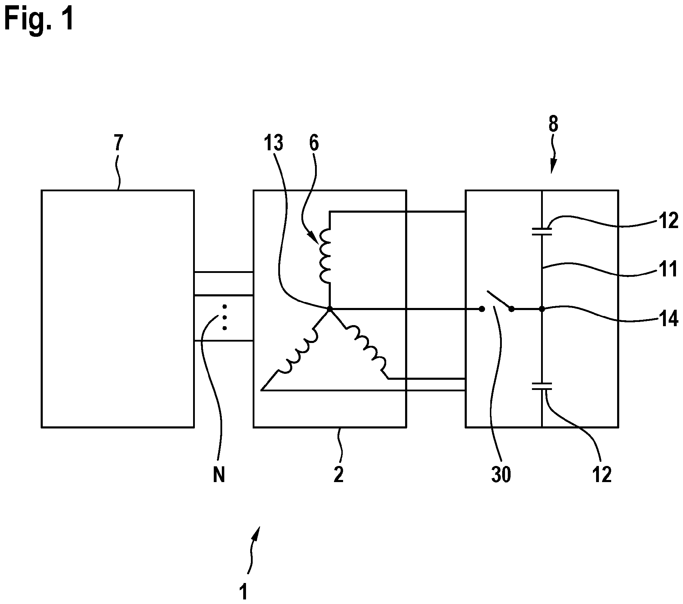

A first embodiment of the present invention will be described with reference to Fig. 1. Fig. 1 shows a schematic diagram of a multi-phase converter 1 according to a first embodiment of the present invention.

In the sense herein and in the following, "primary" will refer to left sides of the figures, while "secondary" will refer to the right sides of the figures. In following examples of bidirectional converters 1, the same nomenclature with reference thereto will be followed as in unidirectional converters 1, for easier understanding. It goes without saying that reverse power transfer in bidirectional converters 1 thus will correspondingly be denoted as being carried out from the "secondary side" to the "primary side".

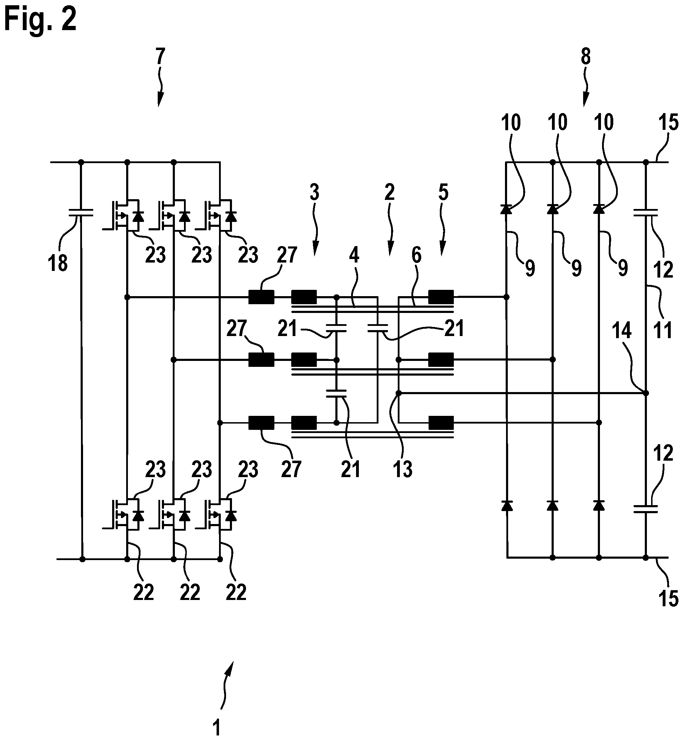

As can be taken from Fig. 1, the multi-phase converter 1, henceforth referred to as "converter", comprises a transformer device 2. The transformer device 2 comprises a primary side 3 with primary winding 4, which will be explained in detail below with reference to Figs. 2 - 11. Furthermore, the transformer device 2 comprises a secondary side 5 with secondary winding 6. For ease of understanding, Fig. 1 shows only the secondary winding 6 of the transformer device 2.

In general, the converter 1 and the transformer device 2 are multi-phase, comprising N phases. In the present embodiments, primarily three-phase, i.e. N = 3, configurations will be explained. In alternative embodiments, the converter 1 may comprise more than three, particularly six, phases.

The converter 1 further comprises a primary side circuit 7 and a secondary side circuit 8. The primary side circuit 7 receives an input voltage to be converted and the secondary side circuit 8 rectifies the voltage received from the transformer device 2 (or vice versa in a bidirectional reverse operation). The primary side circuit 7 will be explained in more detail further below.

The secondary side circuit 8 comprises an output capacitor leg 8 with a plurality of output capacitors 12 for smoothing and stabilizing the output voltage. In the present example, two output capacitors 12 are shown. However, the converter 1 may also comprise more than two output capacitors 12, wherein preferably the converter 1 comprises an even number, for example four or six or eight output capacitors 12.

As can be taken from Fig. 1, the secondary winding 6 is connected in star configuration and connected to the secondary side circuit 8. Herein, an exemplary case of three phases is shown for easier understanding. The star connection of the secondary winding 6 forms a star-point 13.

Herein, the star-point 13 of the secondary winding 6 is connected to a middle-point 14 of the plurality of output capacitors 12. For example, in the present example, the middle-point 14 is situated in the middle, particularly the middle of an electrical length, between the two output capacitors 12. In other embodiments, when more than two output capacitors 12 are provided, the middle-point 14 is defined as the middle between one half of total number of output capacitors 12 (for example, top two output capacitors 12 when providing in total four output capacitors 12) and another half of total number of output capacitors 12 (for example, the other bottom two output capacitors 12 when providing in total four output capacitors 12).

Generally, in converters 1, parasitic or stray capacitances are generated between the windings 4, 6 thereof as well as between the windings 4, 6 and a housing thereof. These parasitic capacitances lead to production of a common-mode voltage. At the star-point 13 of the secondary side 5 of the transformer device 2, this voltage oscillates and commonly demonstrates an oscillating frequency of roughly three times the operating frequency. Due to this common-mode voltage, especially with an oscillating frequency three times the frequency of operation, a resonance between resonance-inductance and the transformer parasitic inductance takes place. This resonance increases losses in the transformer device 2 and leads to higher temperatures, as well as lower efficiency of the converter 1.

However, in the present case, since the star-point 13 is connected to the middle-point 14 of the output capacitors 12, the common mode currents can be effectively diverted, and thereby oscillations of star point voltage is suppressed.

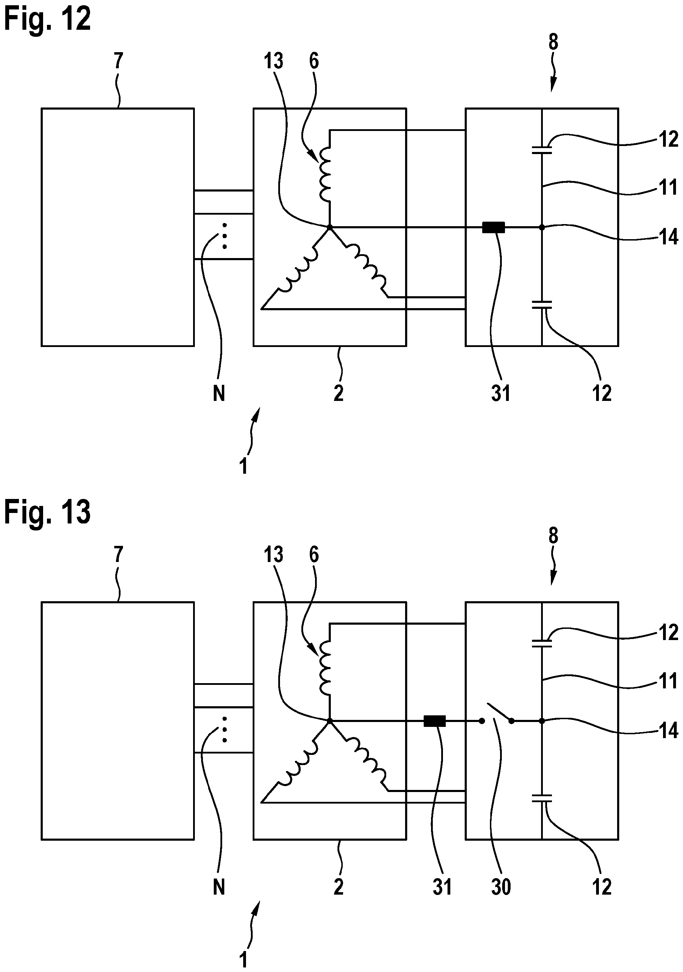

Furthermore, as demonstrated in Fig. 1, this connection between the star-point 13 and the middle-point 14 is preferably achieved via a switch 30, which may be for example a relay or a transistor switch. In other preferable embodiments, this connection is achieved indirectly via an impedance 31, alternatively (Fig. 12) or in addition to the switch 30 (Fig. 13). Preferably, apart from the switch 30 and/or the impedance 31, no further elements are connected between the star-point 13 and the middle-point 14. Thereby, the connection between the star-point 13 and the middle-point 14 can be selectively activated and de-activated depending on operational requirements and higher efficiency of the converter 1.

Now, with respect to Figs. 2 - 11, preferable embodiments will be described.

Fig. 2 shows a schematic diagram of a multi-phase converter 1 according to a second embodiment of the present invention.

In Fig. 2, it is noted that the middle-point 14 is schematically shown as not in the middle between the output capacitors 12. This is, however, merely for ease of drawing. The star-point 13 of the secondary winding 6 is further connected to the middle-point 14 of the output capacitors 12.

Herein, the primary side circuit 7 comprises a plurality of switch legs 22 in parallel with one another, wherein each switch leg 22 comprises two switches 23 in series with one another. In general, the number of switch legs 22 is not restricted to three, and especially corresponds to the number N of phases of the converter 1.

Furthermore, the primary side circuit 7 comprises an input capacitor leg 19 with an input capacitor 18. The primary side circuit 7, as also with the secondary side circuit 8, preferably includes a plurality of input capacitors 18.

In the present embodiment, as shown in Fig. 2, the converter 1 is a unidirectional LLC resonant converter 1.

Herein, the primary side circuit 7 comprises delta connected resonant capacitors 21. Together with an inductance 27 on the primary side 3, these form a resonant tank for the LLC resonant converter 1.

The primary winding 4 of the present embodiment is connected in a delta configuration.

The secondary side circuit 8 further comprises a plurality of rectification legs 9 each with two rectification elements 10 and the output capacitor leg 11 with the output capacitors 12 mentioned above. In the present embodiment, all rectification elements 10 are diodes 10, wherein the diodes 10 are connected in series with one another.

As can be taken from Fig. 2, and as elucidated above, the star-point 13 of the secondary winding 6 is connected to the middle-point 14 of the plurality of output capacitors 12, thereby suppressing or reducing common mode voltages caused by parasitic capacitances in the transformer device 2.

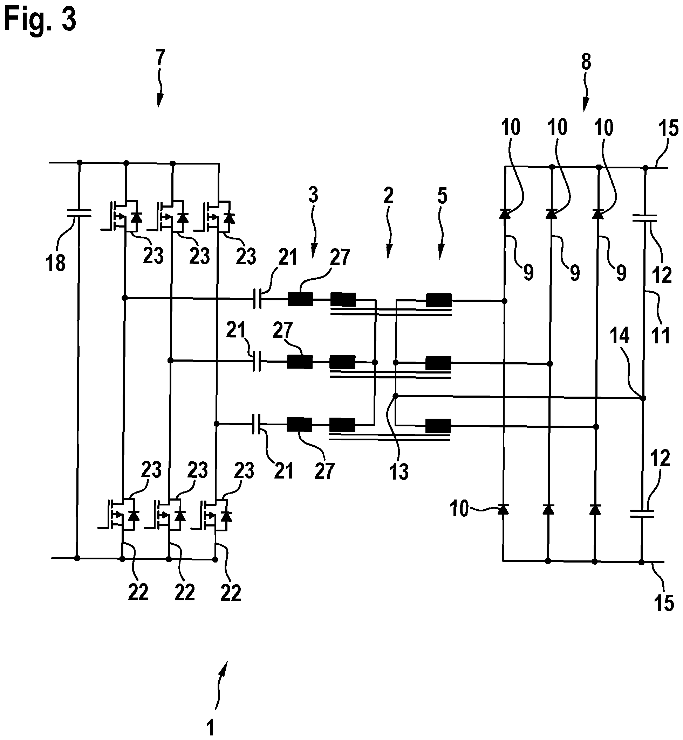

Fig. 3 shows a schematic diagram of a multi-phase converter 1 according to a third embodiment of the present invention.

As can be taken from a comparison of Fig. 3 with Fig. 2, the converter 1 of the present embodiment is a unidirectional LLC resonant converter 1.

Herein, the primary winding 4, as also the secondary winding 6, is connected in a star configuration. The resonant inductors 27, i.e. the resonant tank, herein is also connected in star configuration.

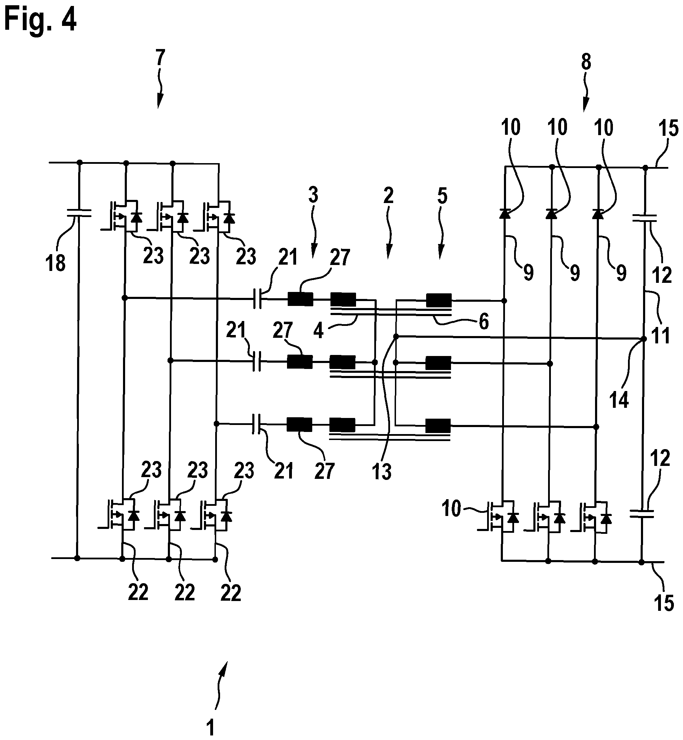

Fig. 4 shows a schematic diagram of a multi-phase converter 1 according to a fourth embodiment of the present invention.

In the present embodiment, the converter 1 is a unidirectional series resonant converter 1, henceforth also referred to as SR converter 1.

Herein, the secondary side circuit 8 comprises, as rectification elements 10, diodes and switches.

Furthermore, although the middle-point 14 is shown at a different location as compared to the foregoing figures, this is merely for ease of drawing and understanding.

As shown in the present figure, the primary winding 4 and the secondary winding 6 are both connected in star configuration, with a star-point 13 of the secondary winding 6 being connected to the middle-point 14 of the output capacitors 12.

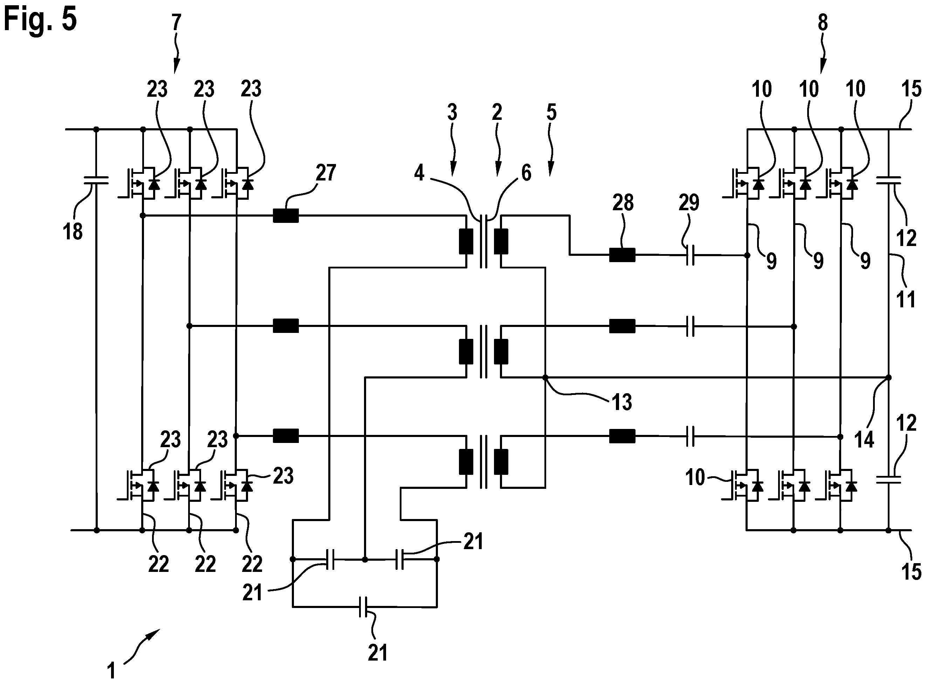

Fig. 5 shows a schematic diagram of a multi-phase converter 1 according to a fifth embodiment of the present invention.

In the present embodiment, the converter 1 is a bidirectional LLC resonant converter 1. Herein, the secondary side circuit 8 comprises switches 10 as rectification elements 10.

Furthermore, an alternative circuit configuration of delta connected resonant capacitors 21 and primary winding 4 as well as of the secondary winding 6 is shown for easier understanding. In the present figure, the transformer device 2 is shown in up-down schematic circuit drawing, as compared with the horizontal circuit drawing of the previous figures, merely for easier understanding of the circuit.

Furthermore, in the present embodiment, the secondary side circuit 8 also comprises a resonant tank formed of a resonant inductance 28 and a resonant capacitor 29 (secondary resonant inductance 28 and secondary resonant capacitor 29). Along with the secondary winding 6, the corresponding secondary side resonant tank is star connected.

The primary side circuit 7 comprises delta connected primary resonant capacitors 21.

Thereby, a bidirectional LLC converter 1 is achieved with suppressed or reduced common mode voltages and thereby lower losses and higher efficiency.

Herein, the three-phase transformer device 2 can be realized by means of three separate transformers or a three-limb or a five-limb integrated three-phase transformer. Further primary and/or secondary side resonant inductors can be integrated to respective three separate transformers or a three-limb or a five-limb integrated three-phase transformer.

Although in the present figure multiple transformer cores are schematically shown, it is also possible to provide one single core for an integrated transformer device 2.

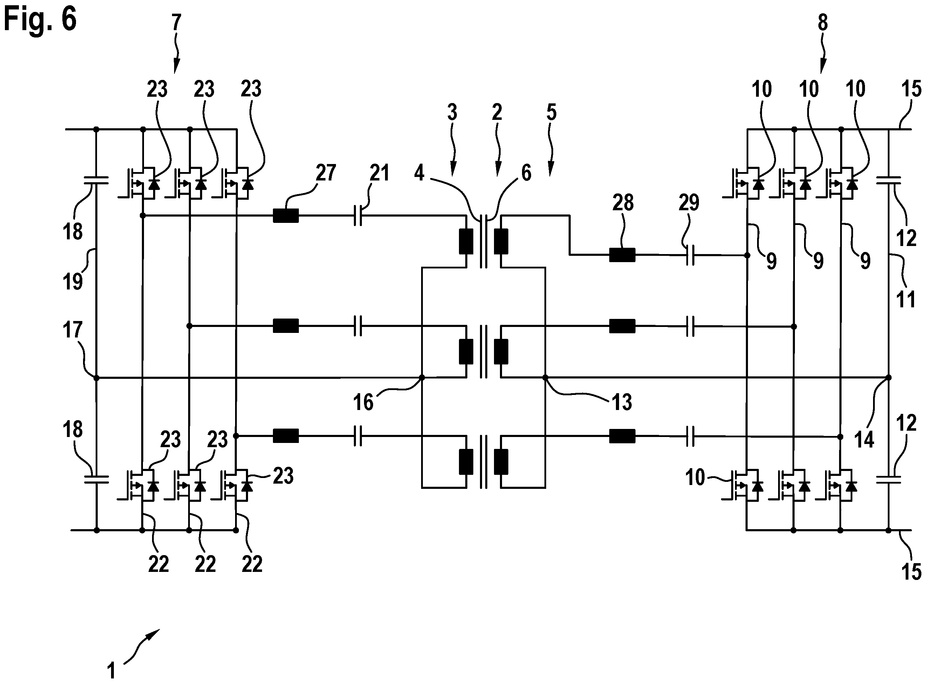

Fig. 6 shows a schematic diagram of a multi-phase converter 1 according to a sixth embodiment of the present invention.

In the present embodiment, the bidirectional LLC resonant converter 1 further comprises a connection between a star-point 16 of the primary winding 4, which is star connection, and a middle-point 17 of the input capacitors 18 of the input capacitor leg 19 of the primary side circuit 7.

In the present embodiment, the converter 1 comprises the input capacitor leg 19, which presently further comprises two input capacitors 18. Herein, the middle-point 17 of the input capacitors 18 is defined, as above with respect to the middle-point 14 of the output capacitors 12, as the middle, especially the electrical middle, between the input capacitors 18.

Thereby, in bidirectional operation, especially when transferring power from the secondary side 5 to the primary side 3, common mode voltages can be reduced, i.e. common mode voltages and their corresponding resonances are reduced in both directions.

Preferably, the connection between the primary star-point 16 and the middle-point of the input capacitors 18 comprises a switch (not shown) or impedance, as described with reference to Fig. 1. Thereby, it is possible to activate the connection in reverse power mode (secondary to primary power transfer), and to de-activate the connection in forward power mode (primary to secondary power transfer). Thus, it is possible to increase efficiency by de-activating the connection in forward power mode, while also providing capability of reducing or suppressing common mode voltages in the reverse power mode.

Accordingly, preferably, the connection between the secondary star-point 13 and the middle-point 14 of the output capacitors 12 in addition or alternatively to the above comprises the switch 30 or impedance of Figs. 1, 12 or 13. Thereby, when transferring power in reverse mode, the connection can be de-activated.

In other words, preferably, in forward power mode, the connection of the secondary star-point 13 is activated and that of the primary star-point 16 is de-activated, while in reverse power mode the connection of the secondary star-point 13 is de-activate and that of the primary star-point 16 is activated.

Thereby, high efficiency in both power transfer directions of the bidirectional converter 1 are achieved.

The aforementioned connections of primary star-point 16 and secondary star-point 13 apply preferably to all of the foregoing and following embodiments, where a star connection of corresponding windings 4, 6 are present. In particular, in any of the foregoing and following embodiments in which the primary winding 4 is in star connection, the primary star-point 16 is preferably connected to the middle-point 17 of the input capacitors 18.

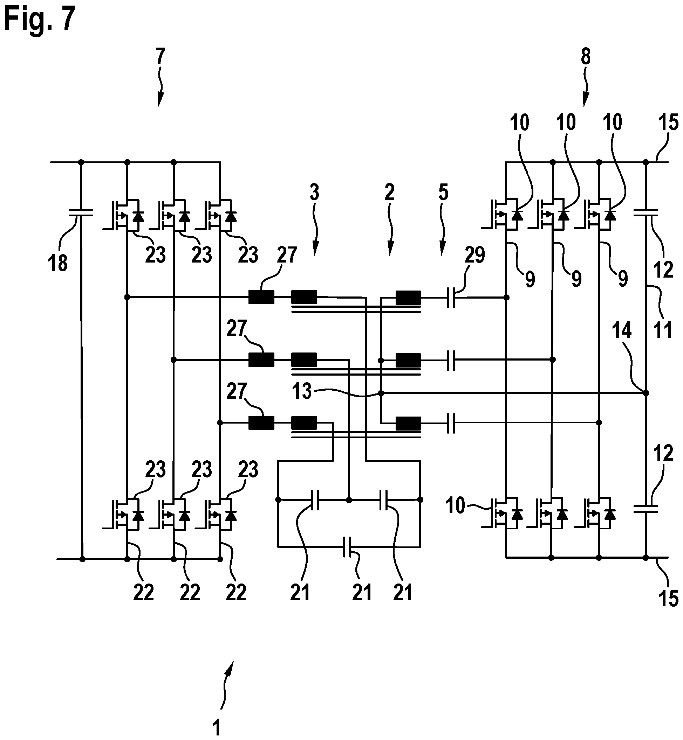

Fig. 7 shows a schematic diagram of a multi-phase converter 1 according to a seventh embodiment of the present invention.

Similar to Fig. 4, the converter 1 of the present embodiment is a series resonant converter 1. Herein, the converter 1 is bidirectional. As can be taken from Fig. 7, the rectification elements 10 of the secondary side circuit 8 are switches.

Additionally, the primary side circuit 7 comprises a delta connected resonant tank, i.e. delta connected resonant capacitors 21 and resonant inductances 27. The primary winding 4 and the secondary winding 6 are connected in star configuration.

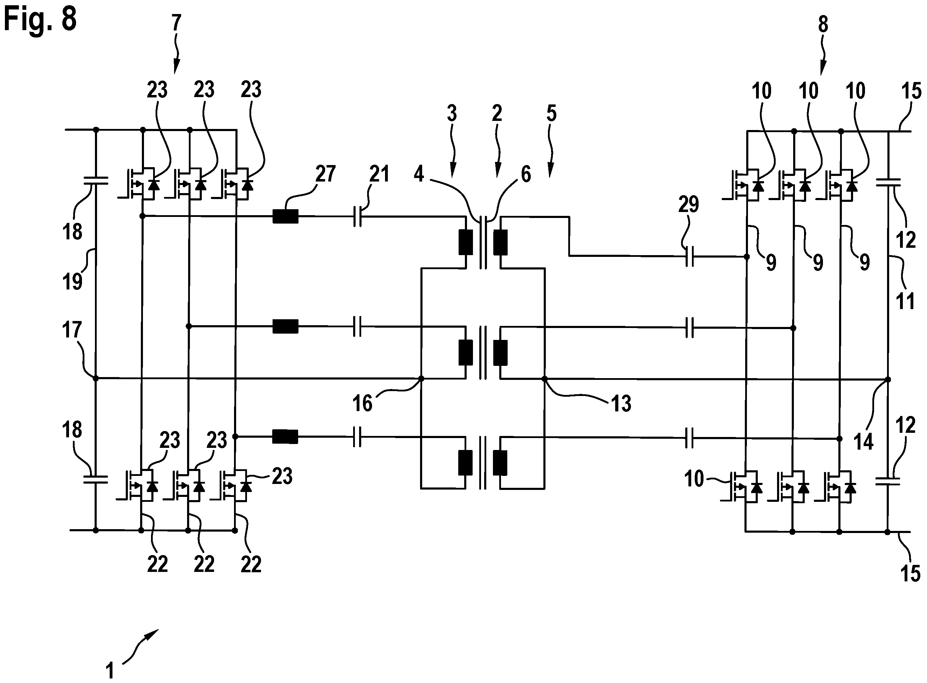

Fig. 8 shows a schematic diagram of a multi-phase converter 1 according to an eighth embodiment of the present invention.

In the present embodiment, the converter 1 is a bidirectional series resonant converter 1, as in Fig. 7. Herein, the primary side star-point 16 is connected to the middle-point 17 of the input capacitors 18, as also elucidated above.

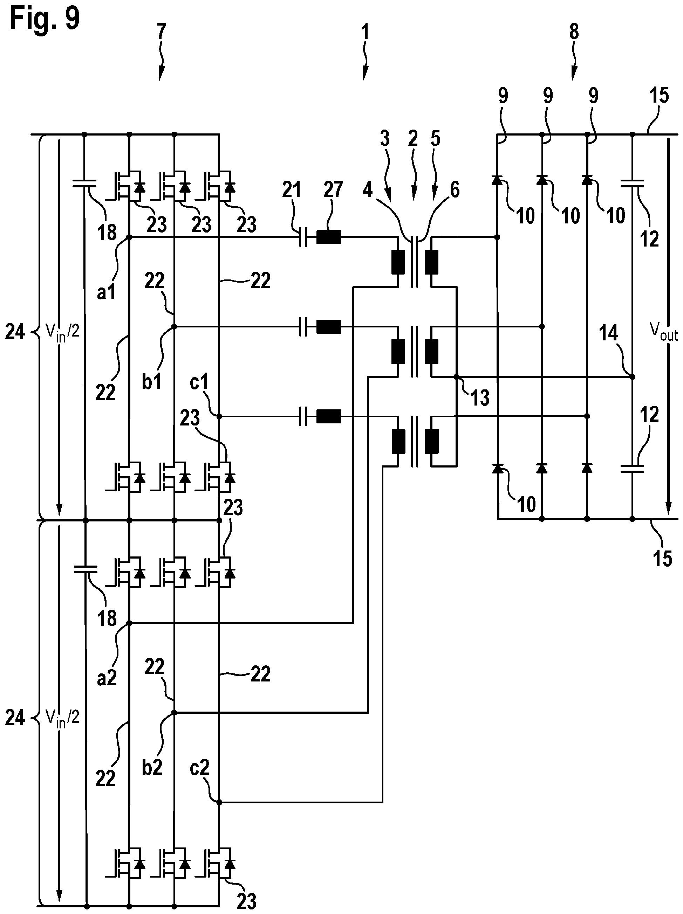

Fig. 9 shows a schematic diagram of a multi-phase converter 1 according to a ninth embodiment of the present invention.

In the present embodiment, the primary side circuit 7 comprises plurality of primary switch legs 22, each with primary switches 23 in series with one another. Furthermore, each of the primary switch legs 22 comprises a plurality of stacked half-bridges 24 connected in series with one another.

Herein, each of the half-bridges 24 receives half the input voltage (Vin/2). The primary winding 4 of each phase of the transformer device 2 is connected between a first switch leg 22 of a top half-bridge 24 and a second switch leg 22, in series with the first switch leg 22, of a bottom half-bridge 24. In other words, one phase of the primary side 3 of the transformer device 2 is connected between two different primary half-bridges 24 in series with one another. In Fig. 9, respective connection points a1, a2 for a first phase, b1, b2 for a second phase, and c2, c2 for a third phase are shown.

As can be taken from Fig. 9, the converter 1 is unidirectional.

Thereby, a multi-phase and multi-level LLC resonant converter 1 is achieved with reduced or suppressed common mode currents.

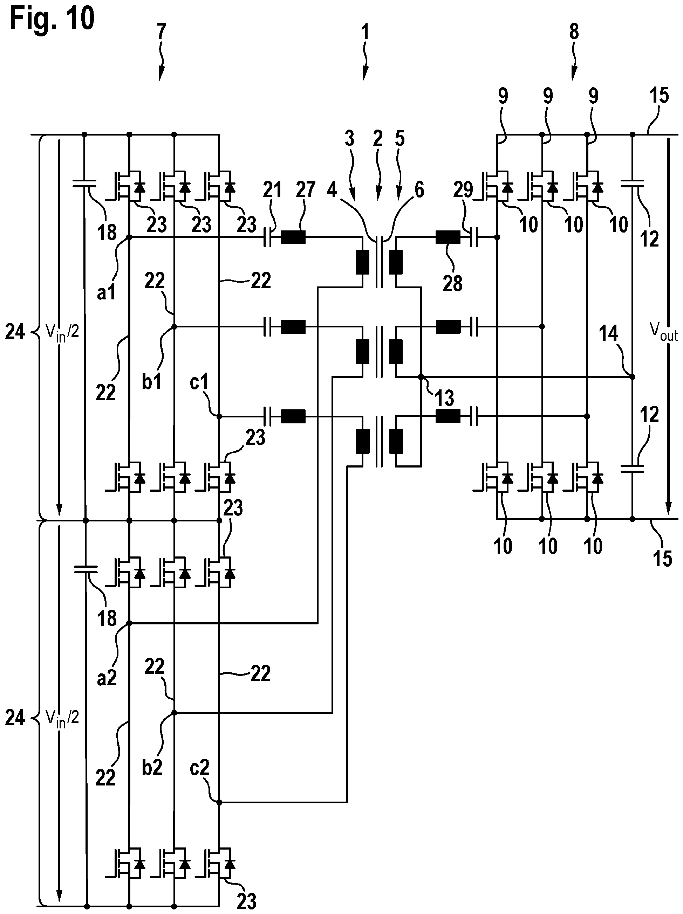

Fig. 10 shows a schematic diagram of a multi-phase converter 1 according to a tenth embodiment of the present invention.

In the present embodiment, the multi-phase and multi-level LLC resonant converter 1 as a bidirectional converter 1 is shown. Therein, the secondary side circuit 8 comprises switches 10 as rectification elements.

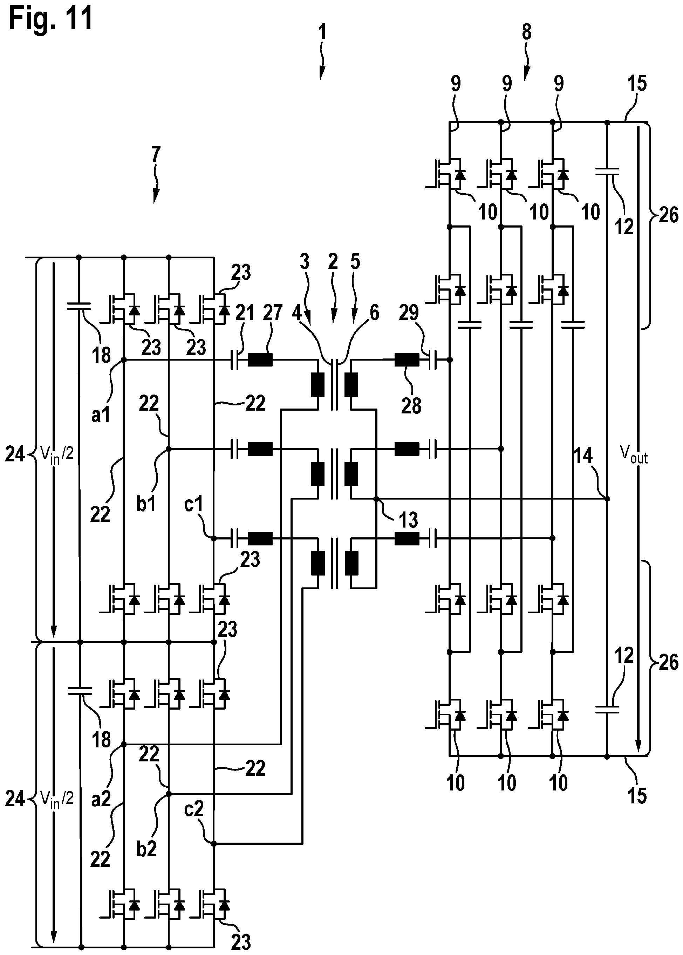

Fig. 11 shows a schematic diagram of a multi-phase converter 1 according to an eleventh embodiment of the present invention.

In the present embodiment, in comparison with the embodiment of Fig. 10, each of the secondary rectifier legs 9 comprises a plurality of stacked secondary half-bridges 26 connected in series with one another.

Thereby, a multi-phase and multi-level LLC resonant converter 1 with high efficiency in both power transfer directions is achieved.

Fig. 12 shows shows a schematic diagram of a multi-phase converter 1 according to a twelfth embodiment of the present invention.

In Fig. 12, the above explanation with regard to the switch 30 of Fig. 1 alternatively being an impedance 31 is shown.

Fig. 13 shows shows a schematic diagram of a multi-phase converter 1 according to a thirteenth embodiment of the present invention.

In Fig. 13, a combination of the switch 30 and the impedance 31 is shown.

The two foregoing described embodiments twelve and thirteen provide further efficiency via switchability of the star-point 13 connection to the middle-point 14. Thereby, especially in combination with bidirectional embodiments, this connection can be selectively activated and de-activated for higher efficiency, especially depending on operation direction. Furthermore, it is to be understood that the switch 30 and/or impedance 31 of the foregoing embodiments twelve and thirteen may in addition or alternatively also apply to the connection of the primary star-point 16 to the primary middle-point 17.

By the foregoing described embodiments, a multi-phase converter 1 is achieved in which common-mode voltages are suppressed, and which further comprises reduced or no resonance between resonance-inductance and transformer parasitic inductance, and which has lower losses, lower temperature, and higher efficiency. The foregoing described embodiments are combinable.

In addition to the foregoing written explanations, it is explicitly referred to figures 1 to 13, wherein the figures in detail show circuit diagrams and configuration examples of the invention. Details on components, especially electrical and/or magnetic components, as well as their interconnections can be explicitly taken therefrom.

### List of Reference Numerals

- 1: multi-phase converter
- 2: transformer device
- 3: primary side
- 4: primary winding
- 5: secondary side
- 6: secondary winding
- 7: primary side circuit
- 8: secondary side circuit
- 9: rectification legs
- 10: rectification elements, switches, diodes
- 11: output capacitor leg
- 12: output capacitor
- 13: star-point of the secondary winding
- 14: middle-point of the plurality of output capacitors
- 15: output of the secondary side circuit
- 16: star-point of the primary winding
- 17: middle-point of input capacitors
- 18: input capacitors
- 19: input capacitor leg
- 20: switch
- 21: primary side resonant capacitor
- 22: primary switch legs
- 23: primary switches
- 24: stacked primary half-bridges
- 25: one phase of the primary side of the transformer device
- 26: stacked secondary half-bridges
- 27: primary side resonant inductance
- 28: secondary side resonant inductance
- 29: secondary side resonant capacitance
- 30: switch
- 31: impedance

## Claims

1. Multi-phase converter (1), comprising:
a transformer device (2) with a primary side (3) with primary winding (4) and a secondary side (5) with secondary winding (6);
a primary side circuit (7) connected to the primary winding (4); and
a secondary side circuit (8) connected to the secondary winding (6); wherein
the secondary side circuit (8) comprises a plurality of rectification legs (9) with rectification elements (10) and an output capacitor leg (11) with a plurality of output capacitors (12),
the secondary winding (6) is connected in star configuration, and
a star-point (13) of the secondary winding (6) is connected to a middle-point (14) of the plurality of output capacitors (12).

2. Multi-phase converter (1) according to claim 1, wherein the output capacitor leg (11) is directly connected, in parallel, between the rectification legs (9) and an output (15) of the secondary side circuit (8).

3. Multi-phase converter (1) according to any one of the foregoing claims, wherein the output capacitor leg (11) comprises an even number, especially exactly two, output capacitors (12) connected in series with one another, and wherein the middle-point (14) is substantially in the middle, especially the electrical middle, of all output capacitors (12).

4. Multi-phase converter (1) according to any one of the foregoing claims, wherein the star-point (13) of the secondary winding (6) is connected to the middle-point (14) of the output capacitors (12) directly or via an impedance (31) and/or via a switch (30).

5. Multi-phase converter (1) according to any one of the foregoing claims, wherein the primary winding (4) is connected in star configuration.

6. Multi-phase converter (1) according to claim 5, wherein a star-point (16) of the primary winding (4) is connected to a middle-point (17) of input capacitors (18) of an input capacitor leg (19) of the primary side circuit (7).

7. Multi-phase converter (1) according to claim 6, wherein the star-point (16) of the primary winding (4) is connected to the middle-point (17) of the input capacitors (18) directly or via an impedance and/or via a switch.

8. Multi-phase converter (1) according to any one of the foregoing claims, wherein the primary side circuit (7) comprises delta connected resonant capacitors (21).

9. Multi-phase converter (1) according to any one of claims 1 to 7, wherein the primary side circuit (7) comprises star connected resonant capacitors (21).

10. Multi-phase converter (1) according to any one of the foregoing claims, wherein the converter (1) is unidirectional, and wherein at least a part of the rectification elements (10) of the secondary side circuit (8) are diodes.

11. Multi-phase converter (1) according to any one of claims 1 to 9, wherein the converter (1) is bidirectional, and wherein the rectification elements (10) of the secondary side circuit (8) are switches.

12. Multi-phase converter (1) according to any one of the foregoing claims, wherein the converter (1) is an LLC converter or a SR converter.

13. Multi-phase converter (1) according to any one of the foregoing claims, wherein the primary side circuit (7) comprises a plurality of primary switch legs (22) with primary switches (23), each of the primary switch legs (22) comprises a plurality of stacked primary half-bridges (24) connected in series with one another, the primary switch legs (22) are connected in parallel to one another; and wherein one phase (25) of the primary side (3) of the transformer device (7) is connected between two primary half-bridges (24) in series with one another.

14. Multi-phase converter (1) according to any one of the foregoing claims, wherein each of the secondary rectification legs (9) comprises a plurality of stacked secondary half-bridges (26) connected in series with one another.
